# EUROPÄISCHE PATENTANMELDUNG

(11) **EP 0 822 122 A2**
(43) Veröffentlichungstag der Anmeldung: **04.02.1998**
(21) Anmeldenummer: 97110475.7
(22) Anmeldetag: 26.06.1997
(51) Int. Cl.: B60R 21/08

(54) **Kopfschutzvorhang in einem Kraftwagen**

(30) Priorität: 31.07.1996 DE 19630854
(71) Anmelder: Daimler-Benz Aktiengesellschaft, 70546 Stuttgart (DE)
(72) Erfinder: Tschäschke, Ulrich, 71139 Ehningen (DE)

(57) **Zusammenfassung**

Ein Kopfschutzvorhang in einem Kraftwagen ist am Dachrahmen zusammengefaßt gelagert und wird beim Crash innenseitig in eine Schutzposition vor eine Fahrzeugtür bewegt, in der er dann zumindest einen oberen Bereich der Türöffnung horizontal überspannend überdeckt. Der Kopfschutzvorhang weist mindestens zwei Vorhangabschnitte auf, die während des Crashes verbunden bleiben, und die nach dem Crash vom unteren Rand des Kopfschutzvorhanges aus entlang einer Trennlinie bis zumindest in eine Teilhöhe voneinander trennbar sind.

## Beschreibung

Die Erfindung betrifft einen Kopfschutzvorhang gemäß dem Oberbegriff des Anspruches 1.

Aus der DE 43 37 656 C2, die im Oberbegriff des Anspruches 1 berücksichtigt ist, ist in einem Kraftwagen ein Kopfschutzvorhang aus reißfestem Gewebe oder reißfester Folie bekannt, der sensorgesteuert aus einer Nichtgebrauchsstellung im Dachbereich in eine seitlich den Kopf des Insassen schützende Wirkstellung bewegbar ist. Hierzu leitet ein horizontal straff gespanntes Seil den Kopfschutzvorhang entlang der B-Säule nach unten und dabei vor den Bereich der beiden seitlichen Türöffnungen. Um durch diesen Kopfschutzvorhang wirklich einen sicheren Schutz vor einem Aufprall an der innenseitigen Kraftwagenseitenwand, z.B. an den Scheiben zu erzielen, muß dieser bis in die Nähe der Bordwand heruntergezogen werden können. Für diesen Fall bildet aber der straff gespannte, reißfeste Kopfschutzvorhang wie auch das diesen haltende Seil bei der Bergung des Insassen nach einem Crash ein Hindernis, dessen Beseitigung, z.B. mit Schneidwerkzeugen, unnötig Zeit bis zur möglichen ersten Hilfe kostet.

Ein derartiger Kopfschutzvorhang für einen Kraftwagen, mit denselben, vorgenannten Nachteilen, ist auch in der DE 36 32 877 A1 beschrieben, der innenseitig als reißfeste Folie oder reißfestes Fangnetz aus dem Dachbereich herausgezogen und über die Fahrzeugseitenwand aufgespannt, und dabei in den Fahrzeugsäulen seitlich geführt wird.

Aus der DE 43 07 175 A1 ist ein Kopfschutzvorhang in einem Kraftwagen zum Schutz vor einem seitlichen Aufprall des Wageninsassen bekannt, der als sich beim Crash aus dem Dachrahmenbereich entfaltender und befüllender Airbag ausgebildet ist. Der Airbag bleibt dabei mit dem Dachrahmen und dem Fenstersäulenbereich verbunden, damit er an einer horizontalen Bewegung gehindert ist. Auch hier tritt nach dem Anprall des Insassen das Problem auf, daß der sich schützend vor die obere Türhälfte legende Kopfschutzvorhang anschließend die Bergung des Insassen aus dem Fahrzeug durch die Türöffnung hindurch behindern kann.

Zum allgemeinen Hintergrund von Kopfschutzvorhängen, die aber nur einen geringen Abschnitt der Türöffnung überdecken, wird noch auf folgende Druckschriften verwiesen: DE 42 38 427 A1, DE 42 32 658 A1, DE 36 36 040 A1 und DE 92 11 423 U1.

Die Aufgabe der Erfindung besteht darin, einen gattungsgemäßen Kopfschutzvorhang derart weiterzubilden, daß die Bergung eines Insassen aus dem Kraftwagen weitgehend ungehindert möglich ist.

Die Aufgabe wird durch die kennzeichnenden Merkmale des Patentanspruches 1 gelöst.

Damit ein am Dachrahmen gelagerter Kopfschutzvorhang beim Crash seine schützende Funktion innenseitig vor einer Karosseriewand optimal erfüllen kann, muß er diese in der Schutzposition vom Dachrahmen aus weit nach unten, am besten bis zur Bordkante reichend überdecken und dabei möglichst seitlich geführt sein, damit der Kopfschutzvorhang bei der Belastung durch den Insassen nicht aus seiner abdeckenden Position gedrückt wird.

Dabei bildet der Kopfschutzvorhang aber bei der Bergung des Insassen nach einem Crash an jeder Türöffnung ein Hindernis, dessen Beseitigung, z.B. mit Schneidwerkzeugen, unnötig Zeit bis zur möglichen ersten Hilfe kostet.

Ein vom unteren Rand in die Höhe weisender, zunächst in der Schutzposition geschlossener Schlitz, bietet nun die Möglichkeit, den Kopfschutzvorhang nach dem Crash entlang des Schlitzes, in bevorzugter Weise von Hand, in zwei Vorhangabschnitte zu teilen, wodurch die Bergung des Insassen aus dem Kraftwagen sofort beginnen kann. In gleicher Weise sind auch mindestens zwei einzelne, aber miteinander verbundene Vorhangabschnitte einsetzbar, die nach dem Crash in ihrer Verbindung bis zumindest in eine Teilhöhe voneinander trennbar sind.

Die Verbindung der Vorhangabschnitte kann durch eine Nähnaht hergestellt werden, die die Eigenheit aufweist, daß sie durch Zug am freien Ende des Nähfadens fortlaufend auftrennt. Dieses freie Ende des Nähfadens kann in einem Greifabschnitt auffallend sichtbar ausgebildet werden.

Die beim Crash verbundenen und nach dem Crash von Hand einfach zu teilenden Vorhangabschnitte finden ebenso bei einem Kopfschutzvorhang Verwendung, welcher als beim Crash befüllbarer Airbag ausgebildet ist und eine Trennlinie mit gasdichten Kanten aufweist, wobei die Trennlinie bei mehreren, gasführend miteinander verbundenen Gaskammern am einfachsten in eine gasfreie Zone zwischen zwei Gaskammern gelegt wird.

Mehrere derartige Trennlinien können am Kopfschutzvorhang vorteilhaft angeordnet werden.

Weitere Vorteile und Ausgestaltungen gehen aus den Unteransprüchen und der Beschreibung hervor.

Die Erfindung ist nachstehend anhand einer Zeichnung näher beschrieben.

Es zeigen:
- Fig. 1: in Seitenansicht einen Ausschnitt aus einem Kraftwagen, mit einer möglichen Anordnung eines am Dachrahmen zusammengefaßt angeordneten Kopfschutzvorhanges,
- Fig. 2: in einer Ansicht entsprechend Fig. 1 ein Ausführungsbeispiel eines Kopfschutzvorhanges in Schutzposition, ausgeführt als Netz,
- Fig. 3: in einer Ansicht entsprechend Fig. 1 ein weiteres Ausführungsbeispiel eines Kopfschutzvorhanges in Schutzposition, ausgeführt als Airbag, und
- Fig. 4: beispielhaft eine mögliche Nähnaht.

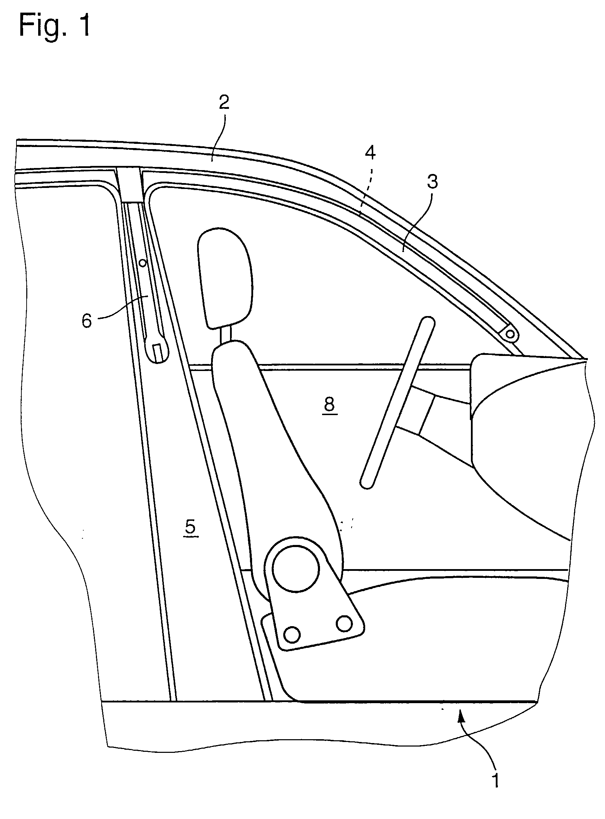

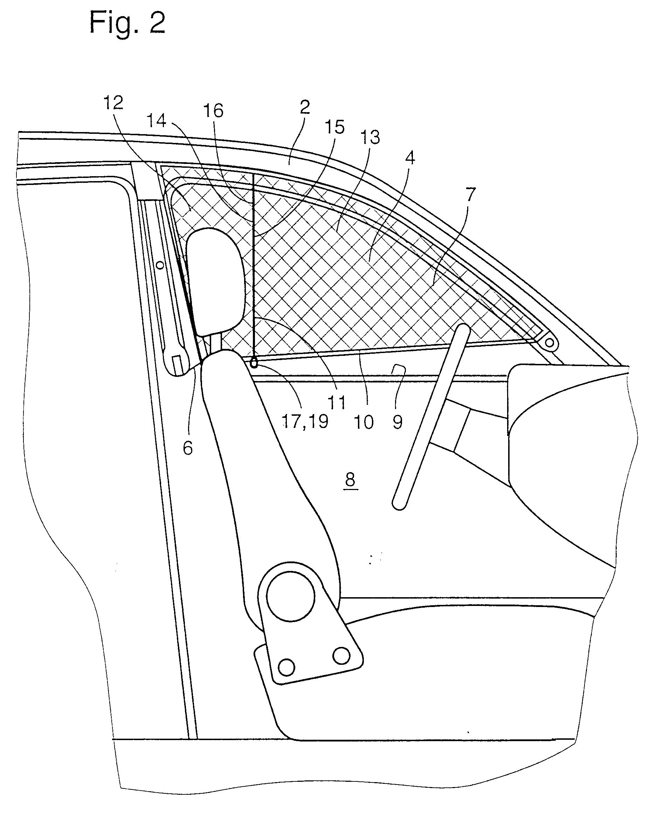

Die Fig. 1 zeigt in Seitenansicht einen Ausschnitt aus einem Kraftwagen 1 mit einem am Dachrahmen 2 hinter einer Blende 3 zusammengefaßt angeordneten Kopfschutzvorhang 4, der bei einem Crash durch einen an der B-Säule 5 gelagerten Seiltrieb 6 in seine in der Fig. 2 dargestellte Schutzposition 7, innenseitig vor die Scheibe der Fahrzeugtür 8 überführbar ist.

In der Schutzposition 7 dämpft der Kopfschutzvorhang 4 einen Aufprall des Insassen auf die Fahrzeugtür 8, die sich neben ihm befindet, wozu der Kopfschutzvorhang 4 weit nach unten in Richtung auf die Bordkante 9 zu bewegt wird, damit der Insasse auch bei einer Nickbewegung nach vorne noch immer in seitlicher Richtung auf den Kopfschutzvorhang 4 trifft.

Der dann zumindest einen oberen Bereich der Türöffnung horizontal überspannende Kopfschutzvorhang 4 weist als Trennlinie 11 einen vom unteren Rand 10 in die Höhe weisenden, geschlossenen Schlitz 11 auf, entlang dem der Kopfschutzvorhang 4 nach dem Crash von Hand bis auf eine Teilhöhe in zwei Vorhangabschnitte 12 und 13 teilbar ist. Somit kann der Kopfschutzvorhang 4 bei der Bergung des Insassen einfach und schnell aufgetrennt werden.

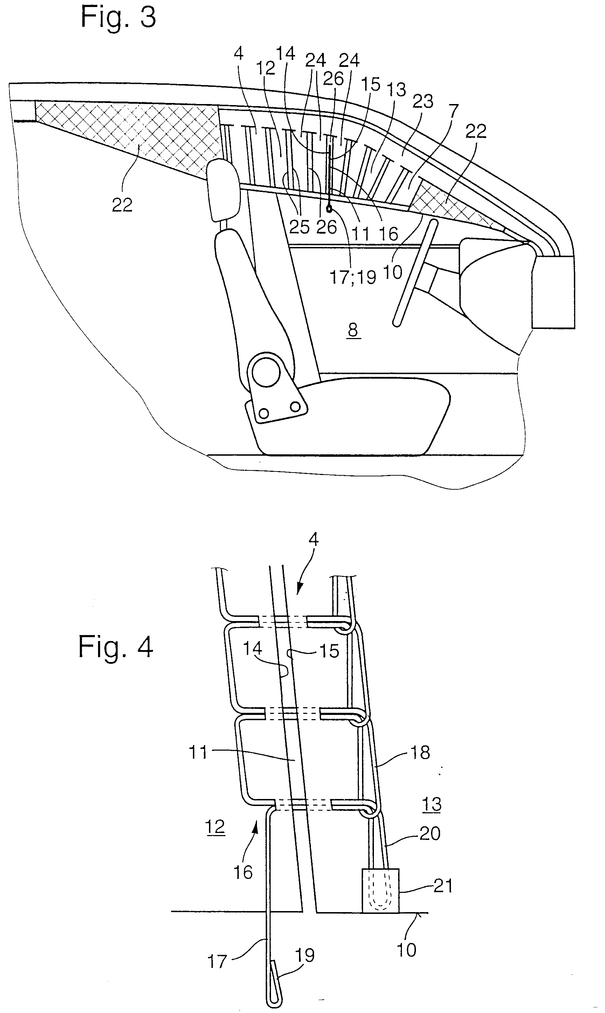

Da die gegenüberliegenden Kanten 14 und 15 des Schlitzes 11 während des Crash unnachgiebig zusammengehalten bleiben sollen, und der Schlitz 11 nach dem Crash dennoch von Hand einfach geöffnet werden können muß, ist der Schlitz hier entlang seiner beiden Kanten 14, 15 durch eine Nähnaht 16 geschlossen, wie sie in Fig. 4 beispielhaft dargestellt ist.

Diese Nähnaht 16 ist dadurch gekennzeichnet, daß sie durch Zug am freien Ende 17 des Nähfadens 18 fortlaufend auftrennt und damit die Verbindung der Kanten 14, 15 auflöst. Hierfür sind aus der Nähtechnik natürlich noch weitere Arten von Nähnähten bekannt und hier anwendbar.

Das freie Zugende 17 des Nähfadens 18, an dem bei der Bergung des Insassen nach dem Crash gezogen werden muß, ist in einem Greifabschnitt 19, z.B. als Griffschlaufe oder andersfarbig auffallend gekennzeichnet. Die letzte Einschlaufung 20 des Nähfadens 18 wird in diesem Falle durch einen Klebestreifen 21 gehalten und dadurch vor einer ungewollten Auftrennung geschützt, wobei die Haltekraft des Klebestreifens 21 leicht zu überwinden ist.

Die Fig. 3 zeigt einen Kopfschutzvorhang 4, der zwischen Netzabschnitten 22 im mittleren Bereich einen Airbag 23 aufweist, der beim Crash aus seiner zusammengefaßten Lage in die Schutzposition 7 entfaltet wird und durch Gas aus einem Gasspeicher bzw. Gasgenerator befüllt als Kissen neben dem Insassen liegt.

Auch hier ist eine Auftrennung entlang einer Trennlinie 11 in zwei Vorhangabschnitte 12 und 13 entlang des mit der Nähnaht 16 zusammengehalten Schlitzes 11 vorgesehen. Da der Airbag 23 mehrere gasführend miteinander verbundene Gaskammern 24 aufweist, die durch die Airbaglagen miteinander verbindende, am oberen Ende zusammengeführte Doppelnähte 25 voneinander getrennt sind, kann der Schlitz 11 vorteilhaft in eine gasfreie Zone 26 zwischen zwei dicht nebeneinander liegenden Nähten 25 eingearbeitet werden, durch die die Kanten 14, 15 des Schlitzes 11 gasdicht verschlossen sind.

## Patentansprüche

1. Kopfschutzvorhang in einem Kraftwagen, der am Dachrahmen zusammengefaßt gelagert ist, beim Crash innenseitig in eine Schutzposition vor eine Fahrzeugtür bewegbar ist, und der dann zumindest einen oberen Bereich der Türöffnung horizontal überspannend abdeckt,
**dadurch gekennzeichnet**,
daß der Kopfschutzvorhang (4) mindestens zwei Vorhangabschnitte (12 und 13) aufweist, die während des Crashes verbunden bleiben, und die nach dem Crash vom unteren Rand (10) des Kopfschutzvorhanges (4) aus entlang einer Trennlinie (11) bis zumindest in eine Teilhöhe voneinander trennbar sind.

2. Kopfschutzvorhang nach Anspruch 1,
**dadurch gekennzeichnet,**
daß die Verbindung der Vorhangabschnitte (12 und 13) von Hand lösbar ist.

3. Kopfschutzvorhang nach Anspruch 1,
**dadurch gekennzeichnet,**
daß die Verbindung der Vorhangabschnitte (12 und 13) durch eine Nähnaht (16) erfolgt, die sich beim Zug am freien Ende (17) des Nähfadens (18) fortlaufend auftrennt.

4. Kopfschutzvorhang nach Anspruch 3,
**dadurch gekennzeichnet,**
daß am freien Ende (17) des Nähfadens (18) ein Greifabschnitt (19) auffallend sichtbar ausgebildet ist.

5. Kopfschutzvorhang nach Anspruch 1,
**dadurch gekennzeichnet**,
daß der Kopfschutzvorhang (4) in der Schutzposition (7) vom Dachrahmen (2) bis nahe der Bordkante (9) des Kraftwagens (1) reicht.

6. Kopfschutzvorhang nach Anspruch 1,
**dadurch gekennzeichnet**,
daß der Kopfschutzvorhang (4) durch einen beim Crash befüllbaren Airbag (23) gebildet ist, dessen Kanten (14, 15) entlang der Trennlinie (11) gasdicht ausgeführt sind.

7. Kopfschutzvorhang nach Anspruch 6,
**dadurch gekennzeichnet**,
daß der Airbag (23) mehrere gasführend miteinander verbundene Gaskammern (24) aufweist, und die Trennlinie (11) in eine gasfreie Zone (26) zwischen zwei Gaskammern (24) gelegt ist.
